# EUROPÄISCHE PATENTSCHRIFT

(11) **EP 4 479 348 B1**
(45) Veröffentlichungstag und Bekanntmachung des Hinweises auf die Patenterteilung: **05.11.2025**
(21) Anmeldenummer: 24701098.6
(22) Anmeldetag: 09.01.2024
(51) Int. Cl.: C01G 30/00, C01G 41/00, H01M 10/0562

(54) **SULFIDISCHER FESTELEKTROLYT FÜR FESTKÖRPERBATTERIEN UND VERFAHREN ZUR HERSTELLUNG**
SULFIDIC SOLID ELECTROLYTE FOR SOLID-STATE BATTERIES AND PRODUCTION METHOD
ÉLECTROLYTE SOLIDE SULFURÉ POUR BATTERIES À L'ÉTAT SOLIDE ET PROCÉDÉ DE FABRICATION

(30) Priorität: 17.02.2023 DE 102023000539
(43) Veröffentlichungstag der Anmeldung: 25.12.2024
(73) Patentinhaber: Mercedes-Benz Group AG, 70372 Stuttgart (DE)
(72) Erfinder: ÜNAL, Mahir, 70597 Stuttgart (DE); CHANG, Hansen, 70178 Stuttgart (DE)
(74) Vertreter: Novagraaf Group
(86) Internationale Anmeldenummer: PCT/EP2024/050365
(87) Internationale Veröffentlichungsnummer: WO 2024/170167

(56) Entgegenhaltungen:
- US-A1- 2021 296 707
- US-A1- 2022 255 126
- KWAK HIRAM ET AL: "Li+ conduction in air-stable Sb-Substituted Li4SnS4 for all-solid-state Li-Ion batteries", JOURNAL OF POWER SOURCES, ELSEVIER, AMSTERDAM, NL, vol. 446, 29 October 2019 (2019-10-29), XP085936996, ISSN: 0378-7753, [retrieved on 20191029], DOI: 10.1016/J.JPOWSOUR.2019.227338
- ZHOU LAIDONG ET AL: "New Family of Argyrodite Thioantimonate Lithium Superionic Conductors", LANGMUIR, vol. 141, no. 48, 23 October 2019 (2019-10-23), pages 19002 - 19013, XP055928044, DOI: 10.1021/jacs.9b08357
- LEE YONGHEUM ET AL: "Lithium Argyrodite Sulfide Electrolytes with High Ionic Conductivity and Air Stability for All-Solid-State Li-Ion Batteries", ACS ENERGY LETTERS, vol. 7, no. 1, 14 January 2022 (2022-01-14), American Chemical Society, pages 171 - 179, XP055924425, ISSN: 2380-8195, DOI: 10.1021/acsenergylett.1c02428
- LI PING ET AL: "Recent Advances and Perspectives of Air Stable Sulfide-Based Solid Electrolytes for All-Solid-State Lithium Batteries", CHEMICAL RECORD, vol. 22, no. 10, 5 July 2022 (2022-07-05), US, XP093147882, ISSN: 1527-8999, Retrieved from the Internet <URL:https://onlinelibrary.wiley.com/doi/full-xml/10.1002/tcr.202200086> DOI: 10.1002/tcr.202200086

## Beschreibung

Die Erfindung betrifft ein sulfidischen Festelektrolyt für Festkörperbatterien.

Zur Speicherung von elektrischer Leistung sind verschiedene Typen von Batterien bekannt. Einer dieser Typen ist die sogenannte Festkörperbatterie. Festkörperbatterien bzw. sekundäre Festkörperbatterien enthalten ein Festelektrolyt bzw. Festkörperelektrolyt. Im Vergleich zum Beispiel zu Lithium-Ionen-Batterien enthalten Festkörperbatterien keine flüssigen oder entzündbaren giftigen organischen Lösemittel, wodurch Festkörperbatterien eine verbesserte Sicherheit im Vergleich zu Lithium-Ionen-Batterien aufweisen. Festkörperbatterien werden daher als vielversprechende Batterien der sogenannten nächsten Generation gesehen.

Um die Leistung von Festkörperbatterien zu steigern, kann das Festelektrolyt abgewandelt werden. Ziel ist es dabei, die ionische Leitfähigkeit sowie die Stabilität gegenüber Lithium weiter zu steigern, was mit einer steigenden Leistung sowie mit einer steigenden Sicherheit der Festkörperbatterien verbunden ist.

Bekannt sind beispielsweise Festelektrolyte mit der grundlegenden Summenformal Li₆ P S₅ R, wobei R ein Halogen, wie Chlor, Brom oder lod sein kann. Der Nachteil solcher klassischer Festelektrolyte liegt nun vor allem im Einsatz des Phosphors. Das Phosphor bindet Sauerstoff aus der Luft, was letztlich zu einem Zerfallen der sulfidischen Struktur führen kann. Aus diesem Grund ist es grundlegend aus dem Stand der Technik bekannt, dass Phosphor durch Antimon ersetzt werden kann, was dazu führt, dass die Reaktion mit Sauerstoff verhindert wird. Letztlich lässt sich so ein luftstabiler sulfidischer Festkörperelektrolyt erzielen, beispielsweise gemäß der Summenformel Li₆₊ₓ Mₓ Sb₁₋ₓ S₅ I, wobei das (Halb-)Metall M typischerweise Si, Ge oder Sn ist. Der Faktor x liegt in einem Bereich von 0,1 < x < 0,7. Dabei wird als Anion nur lod verwendet, um eine Kristallstruktur eines Argyroditen mit einer Raumgruppe F43m zu erzielen. Eine derartige Modifikation ist beispielsweise in "New Family of Argyrodite Thioantimonate Lithium Superionic Conductors" des Journal of the American Chemical Society aus 2019, Band 141, Seite 19002 bis 19013 beschrieben. Das gegenüber dem Phosphor größere Antimon verbessert ferner die ionische Leitfähigkeit der Zusammensetzung.

Die dort beschriebenen Strukturen umfassen als Halogen immer das lod und sind mit einem (Halb)Metall, wie insbesondere Silizium, Germanium oder Zinn versehen. Trotz der verbesserten Beständigkeit gegenüber dem Luftsauerstoff bleibt es auch bei diesem neuartigen phosphorfreien sulfidischen Festelektrolyten so, dass damit ausgestattete Festkörperbatterien zu einem sehr schnellen Kurzschluss neigen und eine niedrige Leistungsdichte bzw. Energiedichte aufweisen. Die US 2022/255126 offenbart Verbindungen des Typs Li_{7+x_y}MₓSb_{1_x}S_{6_y}X_{y}.

Zum weiteren Stand der Technik kann ferner auf die Veröffentlichung "Recent Advances and Perspectives of Air Stable Sulfide-Based Solid Electrolytes for All-Solid-State Lithium Batteries" von Ping Li et al. in The Chemical Record 2022,22 e202200086 (doi.org/10.1002/tcr.202200086 tcr.wiley-vch.de) verwiesen werden.

Die Aufgabe der hier vorliegenden Erfindung besteht nun darin, einen sulfidischen Festkörperelektrolyt für Festkörperbatterien anzugeben, welcher eine Leistungssteigerung gegenüber bekannten Festkörperelektrolyten mit einer guten Handhabbarkeit des Festelektrolyts kombiniert.

Erfindungsgemäß wird diese Aufgabe durch ein Festelektrolyt für Festkörperbatterien mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Den Kern des erfindungsgemäßen Festelektrolyts bildet eine Zusammensetzung mit der grundlegenden Summenformel:

Li₆₊ₓ Mₓ Sb_{1-y} S_{5-z} R

für x = 0 bis 0,7; y = 0 bis 0,7 und z = 0 bis 0,7 und M = Si, Sn, W und R = I₁, Cl₁ Br_{z}, Br₁. Dabei ist es so, dass für den Fall der Verwendung von lod als Rest R das (Halb-)Metall M in jedem Fall Wolfram ist, welches mit einem Anteil von mehr als 0 in der Zusammensetzung vorhanden ist.

Ein derartiger Festelektrolyt ermöglicht eine Festkörperbatterie mit hoher Leistung, hoher Leistungsdichte und einer gleichzeitig sehr hohen Sicherheit, da sowohl Kurzschlüsse als such die Bildung von giftigen Gasen, wie z.B. in einer herkömmlichen Batterie, verhindert wird.

Vorteilhafterweise beschreibt das erfindungsgemäße sulfidische Festelektrolyt eine neue Klasse phosphorfreier, sulfidischer Festelektrolyte mit einer kubischen Argyroditstruktur und weist erhöhte chemische und elektrochemische Eigenschaften im Vergleich zu bekannten Argyroditstrukturen auf.

Eine sehr vorteilhafte Ausgestaltung des sulfidischen Festelektrolyt gemäß der Erfindung kann es dabei vorsehen, dass das (Halb-)Metall Silizium oder Zinn ist, wobei in diesem Fall der Faktor z dann null ist, sodass also immer fünf Anteile Schwefel vorhanden sind. Außerdem führt dies dazu, dass Chlor oder Brom immer alleine und mit einer Stöchiometrie von 1 auftreten, wobei lod ja ohnehin ausgeschlossen ist. Die Faktoren x und y sind in diesem Fall gleich und liegen in einem Bereich zwischen 0 und 0,6 sodass sie also auch beim Wert 0 eine Variante existiert, welche auf Silizium oder Zinn gänzlich verzichtet.

Eine weitere sehr vorteilhafte Ausgestaltung des sulfidischen Festelektrolyt gemäß der Erfindung kann es wie als Sonderfall des Hauptanspruchs bereits ausgeführt vorsehen, dass der Rest, also das Halogen immer lod ist. In diesem Fall wäre das Metall M gemäß Anspruch 1 Wolfram mit einer Stöchiometrie von mehr als 0. Die bevorzugte Ausführungsform dieses Materials sieht es dann ferner vor, dass der Faktor z = 0 ist man Schwefel also immer mit der Stöchiometrie 5 vorliegt, und dass die Faktoren x und y gleich sind und zwischen 0,05-0,2 liegen.

Dieser Festelektrolyt besitzt also einen Aufbau unter Verwendung von lod und Wolfram welches an die Stelle der bisher üblichen (Halb-)Metalle tritt und zusammen mit dem lod eine hohe ionische Leitfähigkeit bei entsprechend guter Stabilität gegenüber Luft, Feuchtigkeit und Lithium bietet.

Eine weitere sehr günstige Ausgestaltung eines sulfidischen Festelektrolyts gemäß der Erfindung kann es ferner vorsehen, dass dieser überhalogenisiert ist. Für diesen Fall umfasst der Rest also mehr als ein Halogen mit einer gemeinsamen Stöchiometrie, die größer als 1 ist. Der Faktor y wäre in diesem Fall also 0, die Faktoren x und z wären gleich und lägen in einem Wertebereich von 0,1-0,7. Durch diese Überhalogenisierung kommt es dann, insbesondere wenn gemäß einer sehr vorteilhaften Weiterbildung hiervon auf das (Halb-)Metall gänzlich verzichtet wird, zu einer drastischen Erhöhung der ionischen Leitfähigkeit durch Expansion der kubischen Kristallstruktur in dem Material des Festelektrolyts. Der gleichzeitige Einsatz von Brom und Chlor mit einer gemeinsamen Stöchiometrie, welche größer als 1 ist, erzielt diese drastische Erhöhung der ionischen Leitfähigkeit durch eine Senkung der Aktivierungsenergie für die Lithiumdiffusion. Der Wert der Aktivierungsenergie durch Überhalogenisierung kann auf unter 0,2 eV gesenkt werden während Standardwerte typischerweise in der Größenordnung von 0,28 eV und 0,35 eV liegen.

Besonders diese Überhalogenisierung führt also zu einem hocheffizienten und gegenüber Umgebungsbedingungen sehr stabilen Material mit sehr hoher ionischer Leitfähigkeit. Das Verfahren zur Herstellung des sulfidischen Festelektrolytsfür den Fall das (Halb)Metall enthalten ist, kann die folgenden Schritte umfassen Zunächst erfolgt ein mechanisches Mischen der Edukte zu einem glasigen bzw. amorphen Pulvergemisch. Die Edukte umfassen, je nach gewünschter Zusammensetzung:
- Lithiumsulfid (Li₂S);
- Antimon(III) - oder (V)Sulfid (Sb₂S₃, Sb₂S₅), wobei hier beide Oxidationsstufen zum Einsatz kommen können;
- Siliziumdisulfid (SiS₂), Zinn(IV)Sulfid (SnS₂) und/oder Wolfram(IV)Sulfid (WS₂); sowie
- Lithiumchlorid (LiCI), Lithiumbromid (LiBr) und/oder Lithiumiodid (Lil).

Im nächsten Schritt erfolgt dann ein Heizen des amorphen Pulvergemisches auf Temperaturen zwischen 470 °C - 580 °C in einer Argonatmosphäre für 1 - 7 Tage, oder Heizen des amorphen Pulvergemisches unter statischem oder dynamischem Vakuum bei einer Temperatur zwischen 400 - 600 °C für 1-7 Tage. Durch das Heizen des glasigen, amorphen Pulvers erhält man aus der Mischung eine kristalline Struktur.

Die Herstellung des neuen Festelektrolyts kann also mittels der klassischer Syntheseroute erfolgen. Damit wird die Herstellung des neuen Festelektrolyts einfach und zuverlässig möglich, da die Prozesse bekannt sind und prozesssicher in bestehenden Anlagen durchgeführt werden können.

Eine besonders günstige Ausgestaltung des Verfahrens zur Herstellung des neuen Festelektrolyts kann es ferner vorsehen, dass die Partikelgröße des Lithiumsulfids entsprechend klein gewählt wird, beispielsweise in der Größenordnung von weniger als 3 µm. Besonders bevorzugt kann die Partikelgröße kleiner als 1 µm sein. Durch eine Kontrolle der Partikelgröße des Lithiumsulfids als Edukt lässt sich die Endpartikelgröße des synthetisierten Festelektrolyts entsprechend beeinflussen. Je kleiner die Partikelgröße des Lithiumsulfids ist, desto kleiner ist auch die des Festelektrolyts. Somit sind die genannten Größen ideal, um eine hohe Stabilität bei guter Funktionalität der Festelektrolyte zu erreichen.

Weitere vorteilhafte Ausgestaltungen des erfindungsgemäßen Festelektrolyts ergeben sich auch aus den Ausführungsbeispielen des Materials, welche nachfolgend unter Bezugnahme auf die Tabelle näher dargestellt ist.

| | | | | |
|---|---|---|---|---|
| Li₆₊ₓSb_{1-y}SiₓS₅Cl₁ | Li₂S | Sb₂S₃ | SiS₂ | LiCl |
| mit x=y und x z.B. 0 bis 0,6 | | | | |
| Li₆₊ₓSb_{1-y}SiₓS₅Br₁ | Li₂S | Sb₂S₃ | SiS₂ | LiBr |
| mit x=y und x z.B. 0 bis 0,6 | | | | |
| Li₆₊ₓSb_{1-y}WₓS₅I₁ | Li₂S | Sb₂S₃ | WS₂ | LiI |
| mit x=y und x z.B. 0,05 bis 0,2 | | | | |
| Li₆₊ₓSb₁S_{5-z}Cl₁Br_{z} | Li₂S | Sb₂S₃ | LiCl | LiBr |
| mit x=z und x z.B. 0,1 bis 0,7 | | | | |

In der Tabelle sind mögliche Zusammensetzungen des Festelektrolyts für Festkörperbatterien in vier einzelnen Abschnitten dargestellt. Die Zusammensetzungen in den Abschnitten beschreiben dabei das erhältliche Material in der ersten Spalte ganz links anhand der Formel und der Faktoren x, y, z. Darauffolgenden sind verschiede Werte für den Faktor x angegeben, der je nach Zusammensetzung derselbe ist, wie der Faktor y oder z. Die weiteren Spalten zeigenden die Ausgangstoffe, aus denen das Material hergestellt wird. Dabei ist das Antimonsulfid hier immer als Antimon(V)Sulfid aufgeführt, es könnte jedoch auch das Antimon(III)Sulfid verwendet werden, die unter angegebene Mengenverhältnisse wären dann entsprechend anzupassen. Als Edukt für das (Halb-)Metall M ist in den beiden oberen Abschnitten jeweils Siliziumsulfid in dem Abschnitt darunter Wolframsulfid angegeben. In dem unteren Abschnitt wird kein (Halb-)Metall benötigt. In der Spalte ganz rechts in den drei oberen Abschnitten und in den beiden rechten Spalten des unteren Abschnitts steht dann das jeweils benötigte Lithiumhalogenid.

Diese Ausgangsstoffe werden vermischt. Die Mischung aus amorphem glasigem Pulver wird dann z.B. bei 470 °C bis 580 °C in einer Argon-Atmosphäre für 1 bis 7 Tage erhitzt, um so die kristalline Struktur des Festelektrolyt zu erhalten.

## Patentansprüche

1. Sulfidischer Festelektrolyt für Festkörperbatterien, welcher als phosphorfreier Festelektrolyt mit kubischer Argyroidtstruktrur ausgebildet ist,
**gekennzeichnet durch**
eine Zusammensetzung gemäß der Summenformel:
Li₆₊ₓ Mₓ Sb_{1-y} S_{5-z} R
für x = 0 bis 0,7; y = 0 bis 0,7 und z = 0 bis 0,7, wobei gilt, dass das (Halb-)Metall M = Si, Sn, W und das Halogen R = I₁, Cl₁ Br_{z}, Br₁ umfasst, und wobei ferner gilt, dass für den Fall das R = I₁ ist, M = W und x > 0 ist.

2. Sulfidischer Festelektrolyt nach Anspruch 1,
**dadurch gekennzeichnet, dass**
für den Fall, dass M = Si, Sn gilt R = = Cl₁ Br_{z}, Br₁, und wobei ferner gilt z=0 und x=y mit x = 0 bis 0,6.

3. Sulfidischer Festelektrolyt nach Anspruch 1,
**dadurch gekennzeichnet, dass**
für den Fall das R = I₁ ist, M = W und x > als 0 ist gilt
z=0 und x=y mit x = 0,05 bis 0,2.

4. Sulfidischer Festelektrolyt nach Anspruch 1,
**dadurch gekennzeichnet, dass**
für den Fall das R = Cl₁ Br_{z} ist, gilt
y=0 und x=z mit x = 0,1 bis 0,7.

## Claims

1. Sulfide solid electrolyte for solid-state batteries, which is in the form of a phosphorus-free solid electrolyte having a cubic argyroid structure,
**characterized by**
a composition according to the molecular formula:
Li₆₊ₓ Mₓ Sb_{1-y} S_{5-z} R
where x = 0 to 0.7; y = 0 to 0.7 and z = 0 to 0.7, where the (semi-)metal M = Si, Sn, W and the halogen R = I₁, Cl₁ Br_{z}, Br₁, and also where, if R = I₁, M = W and x > 0.

2. Sulfide solid electrolyte according to claim 1,
**characterized in that**
if M = Si, Sn, R = = Cl₁ Br_{z}, Br₁, and also where z=0 and x=y with x = 0 to 0.6.

3. Sulfide solid electrolyte according to claim 1,
**characterized in that**
if R = I₁, M = W and x > than 0,
z=0 and x=y with x = 0.05 to 0.2.

4. Sulfide solid electrolyte according to claim 1,
**characterized in that**
if R = Cl₁ Br_{z},
y=0 and x=z with x = 0.1 to 0.7.

## Revendications

1. Électrolyte solide sulfuré pour batteries tout-solide, lequel est réalisé sous forme d'électrolyte solide exempt de phosphore comportant une structure d'argyrodite cubique, **caractérisé par**
une composition conformément à la formule brute :
Li₆₊ₓ Mₓ Sb_{1-y} S_{5-z} R
pour x = 0 à 0,7 ; y = 0 à 0,7 et z = 0 à 0,7, dans lequel s'applique le fait que le (semi)métal comprend M = Si, Sn, W et l'halogène comprend R = I₁, Cl₁ Br_{z}, Br₁, et dans lequel s'applique en outre le fait que, dans le cas où R = I₁, M = W et x > 0.

2. Électrolyte solide sulfuré selon la revendication 1,
**caractérisé en ce que**
dans le cas où M = Si, Sn, il s'applique R = = Cl₁ Br_{z}, Br₁, et dans lequel s'applique en outre le fait que z = 0 et x = y avec x = 0 à 0,6.

3. Électrolyte solide sulfuré selon la revendication 1,
**caractérisé en ce que**
dans le cas où R = I₁, M = W et x > 0, il s'applique
z = 0 et x = y avec x = 0,05 à 0,2.

4. Électrolyte solide sulfuré selon la revendication 1,
**caractérisé en ce que**
dans le cas où R = Cl₁ Br_{z}, il s'applique
y = 0 et x = z avec x = 0,1 à 0,7.
